Europäisches Patentamt

European Patent Office

Office européen des brevets

(11) Publication number: **0 207 620**
**B1**

## EUROPEAN PATENT SPECIFICATION

(45) Date of publication of patent specification: **11.07.90**

(21) Application number: **86303965.7**

(22) Date of filing: **23.05.86**

(51) Int. Cl.⁵: **F 01 K 21/04,** F 02 C 3/22,
F 02 C 3/30

(54) **Energy recovery.**

(30) Priority: **18.06.85 GB 8515392**
**04.06.85 GB 8513997**

(43) Date of publication of application:
**07.01.87 Bulletin 87/02**

(45) Publication of the grant of the patent:
**11.07.90 Bulletin 90/28**

(84) Designated Contracting States:
**AT BE CH DE FR GB IT LI LU NL SE**

(56) References cited:
**EP-A-0 041 873**
**EP-A-0 051 487**
**EP-A-0 053 045**
**EP-A-0 086 504**
**EP-A-0 115 752**
**EP-A-0 150 990**
**CH-A- 427 411**
**DE-A-2 005 656**
**DE-B-1 228 856**
**US-A-2 869 324**

(73) Proprietor: **IMPERIAL CHEMICAL INDUSTRIES PLC**
**Imperial Chemical House, Millbank**
**London SW1P 3JF (GB)**

(72) Inventor: **Pinto, Alwyn**
**18 Cambridge Road**
**Linthorpe Middlesbrough Cleveland (GB)**

(74) Representative: **Gratwick, Christopher et al**
**Imperial Chemical Industries PLC Legal**
**Department: Patents PO Box 6 Bessemer Road**
**Welwyn Garden City Herts, AL7 1HD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

# EP 0 207 620 B1

**Description**

Energy Recovery

This invention relates to energy recovery and in particular to the recovery of energy from fuel gas streams containing carbon dioxide and having a low calorific value. In some processes such gas streams are produced as byproducts or as waste products but, for an energy efficient overall process, recovery of the fuel value from the low calorific value gas stream is desirable. In some processes the fuel value of such low calorific value gas streams can be recovered by using the low calorific gas as part, or all, of the fuel required to fire a furnace used in the process. However in other processes no such fired furnace is employed and so this option is not available.

In the present invention the low calorific value gas is combusted, preferably catalytically, and the combustion products are used to power a turbine producing shaft power. In the process of the invention heat is also recovered from the exhaust gas from the turbine.

In operating a gas turbine it is necessary to compress large volumes of air as ballast gas in order to provide a sufficient mass flow through the turbine and to avoid excessive temperatures, which would lead to unattainable specifications for materials of construction and to the production of exhaust gases having concentrations of nitrogen oxides above allowable limits. As a result of a considerable fraction of the power generated by the turbine is used in the compression of that air and is not available to external users. A second problem is that the turbine exhaust gas is still hot, and accordingly it is common to cool it in a waste heat boiler; however, if steam at a pressure high enough to drive a steam turbine is not to be produced, the exhaust gas leaving the waste heat boiler is still hot enough to justify further heat recovery, if this could be economically done.

It is known, see for example EPO—A—150990, that at least part of the excess of air normally used can be replaced by steam introduced by direct contact of the air with water heated by indirect heat exchange with the turbine exhaust under sufficient pressure to prevent boiling.

In DE—A—2005656 such a procedure has been applied to a turbine system employing a low calorific value carbon dioxide-containing gas as the fuel and both the fuel gas and the air are saturated by direct contact with hot water streams.

In the present invention the carbon dioxide is removed from the fuel gas prior to combustion by means of a "wet" carbon dioxide removal process and the regeneration of the absorbent used in the "wet" carbon dioxide removal process includes heating with heat recovered from the turbine exhaust.

According to the present invention there is provided a process for the recovery of energy from a low calorific value fuel gas containing carbon dioxide by the production of shaft power comprising, in an absorption zone, contacting said fuel gas with a carbon dioxide-lean aqueous solution of an absorbent for carbon dioxide so that the contacting of the fuel gas with the aqueous solution serves to introduce steam by saturation and to absorb carbon dioxide from the fuel gas, giving a carbon dioxide-depleted fuel gas having a calorific value of 15 to 1100 BTU/scf (0.6 to 41 MJ.m$^{-3}$) and which is fed to a combustion zone and a carbon dioxide loaded absorbent solution which is fed to a regeneration zone; combusting said carbon dioxide-depleted fuel gas with air and expanding the resultant combustion products in a turbine producing the shaft power; and regenerating said absorbent solution in said regeneration zone so as to give a carbon dioxide-lean absorbent solution which is recycled to said absorption zone; and wherein the air at the combustion zone inlet pressure is provided by a compressor driven by said shaft power, steam is added to the combustion air, prior to combustion, by contact of the air with a stream of hot water obtained by indirect heat exchange of the turbine exhaust gas under sufficient pressure to prevent boiling, and the regeneration of the absorbent solution includes heating it by indirect heat exchange with the turbine exhaust gas under sufficient pressure to prevent boiling.

The wet carbon dioxide removal process serves to effect saturation of, and hence introduce steam into, the gas fed to combustion. However we do not preclude the use of an additional saturation step, wherein the carbon dioxide-depleted fuel gas is contacted with hotter water, prior to feeding to the combustion zone. Prior to feeding the carbon dioxide-lean absorbent back to the carbon dioxide absorption stage, the carbon dioxide-lean absorbent is generally cooled, eg by indirect heat exchange with water. The resultant hot water may be used to saturate the carbon dioxide-depleted fuel gas leaving the carbon dioxide absorption stage.

In the process of the invention the fuel gas prior to carbon dioxide removal preferably contains at least 20% by volume of carbon dioxide: if left in the fuel gas, the calorific value of the fuel gas would be too low for economic use in the process of the invention.

If necessary the shaft power can also compress the fuel gas to the required combustion zone inlet pressure; however in many cases the fuel gas will already be at a sufficient pressure.

The carbon dioxide-containing fuel gas may be methane, natural gas, or a gas containing higher hydrocarbons mixed with non-combustible gases such as nitrogen in addition to carbon dioxide. The invention is more especially applicable to the use of fuels of low calorific value such as gas mixtures containing hydrogen and/or carbon monoxide in addition to carbon dioxide such as producer gas, blast furnace gas, air/hydrocarbon partial oxidation gas, catalyst regeneration off-gas, pressure swing adsorption (PSA) waste gas, and rich-mixture combustion gas. Preferably the calorific value of the fuel gas, after the carbon dioxide removal step, is in the range of 25 to 500 BTU/scf (0.9 to 19 MJ.m$^{-3}$), and

2

particularly is below 300 BTU/scf (11 MJ.m$^{-3}$). The invention is of particular utility, as described below, where the fuel gas is a hydrogen-containing gas, for example, a waste gas from the production of hydrogen or ammonia (the waste gases produced in such processes in the course of removal of impurities often contain a proportion of hydrogen). The use of a hydrogen-containing gas as the fuel is often beneficial, particularly where the combustion is effected catalytically. To facilitate combustion, the fuel gas preferably contains 4 to 20% by volume of hydrogen, calculated on a dry basis, at least at the start-up of the process.

The pressure at which the carbon dioxide-depleted fuel gas is provided to the combustion zone is typically in the range 4 to 10 bar abs. If necessary a portion of the shaft power produced may be used for the compression of the fuel gas to the desired combustion zone inlet pressure.

The combustion air can, if desired, contain additional oxygen or less oxygen than in ambient air, but not much advantage results from the use of air containing more than 40% by volume of oxygen (since too little steam can be introduced by contacting with water) or from the use of air containing less than about 15% by volume of oxygen) since then more power is consumed in compressing the gas to the combustion pressure). Where, as described below, air, oxygen-enriched air, or oxygen-depleted air, is used elsewhere in the overall process, the combustion air is usefully of the same composition.

In the process of the invention, the excess of oxygen over combustible fuel need be less than in normal gas turbine practice, since the steam incorporated into the combustion air, and the fuel gas during the carbon dioxide removal process, is providing ballast gas. The pressure at which the combustion air is provided is generally of the same order as that of the fuel gas, but provision may be made to mix the fuel gas and combustion air streams by injection, in which event the pressure of the streams may differ substantially.

Owing to the steam content of the saturated fuel gas and combustion air streams, these streams may be mixed safely upstream of the combustion zone, providing that the temperature is not to high and that there is no accidental combustion catalysis by the metal from which the plant is constructed.

The saturated fuel gas and/or combustion air should be heated to a temperature such that combustion takes place in the combustion zone. If the combustion is catalysed, or catalytically initiated, this temperature need not be very high and may be, for example as low as 200°C, calculated for the mixture before combustion, particularly where the fuel gas contains hydrogen. This heating can be, for example, by indirect heat exchange with the turbine exhaust gas, preferably before the indirect heat exchange producing the hot water.

Where the combustion is effected catalytically, the catalyst typically comprises platinum supported on a refractory oxide such as alumina. To avoid obstructing the gas flow, the support is preferably in the form of a honeycomb, with at least 15 through passages per square cm. Usually such catalysts have a primary support made of ceramic or refractory alloy with a secondary support applied as a washcoat to the primary support. The active metal combustion catalyst is carried by the secondary support.

Where the combustion is catalytic, the combustion zone outlet temperature is suitably in the range 650 to 800°C, and the outlet gas will then contain substantially no nitrogen oxides since its temperature during combustion is not much higher than this.

In the turbine, expansion takes place from the inlet pressure, typically in the range 3 to 10 bar abs., to an outlet pressure, typically up to 2 cm Hg gauge, depending on the local ambient pressure level and on whether water vapour can be condensed out of the exhaust gas before discharge to the atmosphere.

The turbine exhaust gas can, if desired, be partly cooled by heat exchange with fuel gas or combustion air or both. In any event it is heat exchanged both with water and with the aqueous absorbent solution under too great a pressure to permit boiling to produce the hot water stream used for saturation of the air and to provide heating of the absorbent in the regeneration thereof. Since the exhaust gas temperature after such heat exchange with water and absorbent solution is typically under 100°C, not much heat can be recovered from it by direct heat exchange with water; this is however not excluded and the resulting warm condensate can be usefully recycled into the water system used to effect saturation. As described below, in some cases the heat recovered from the turbine exhaust gas is used in the overall process to heat an aqueous medium performing another function.

The advantageous energy economy of the process arises from the following factors

a) steam as ballast gas is provided by pumping hot water, which uses less power than would be needed to provide a corresponding excess of compressed air;

b) the ballast steam is at temperatures corresponding to the partial pressures of steam in the saturated fuel and in the combustion air; these temperatures are substantially lower than that which would be needed to produce steam at the turbine inlet pressure; hence heat can be recovered from the turbine exhaust gas down to a lower temperature;

c) since heat is recovered as hot water, it is a simple matter to recover useful power from other sources from which heat can be recovered as hot water; the hot water produced from such other sources can be added to the hot water obtained by heat recovery from the turbine exhaust gas. Also, since the combustor and turbine are designed to handle steam-containing gas, steam can be added as such, if available, and converted to useful power.

Since the heat exchange with water and absorbent solution under pressure does not produce steam by phase separation, the risk of corrosion is much less than in a boiler and so the water need not be purified to boiler feed standards. The water can itself be a waste stream, for example from distillation of an aqueous solution such as crude alcohol, provided it does not contain impurities that would form scales or gums under the process conditions. If the water contains combustible impurities that can be volatilised, these will be combusted. Thus combustible water-containing waste streams such as fusel oil can be disposed of by using them for saturation.

As mentioned above, the invention is of particular utility where the fuel gas is a waste product from processes producing hydrogen-containing product gases, such as ammonia synthesis gas, or hydrogen for use in hydrogenation or reduction processes, e.g. "technical" hydrogen. In such processes the procedures employed for removal of impurities from the raw gas in order to give the product often give a waste gas stream containing combustible components including at least one of hydrogen, carbon monoxide, and methane, in admixture with carbon dioxide and generally nitrogen, and/or argon. The impurity removal process may be cryogenic or PSA.

In·one form of the invention the raw gas is obtained by reacting a carbonaceous feedstock with an oxygen containing gas, e.g. oxygen, air, oxygen-enriched, or oxygen-depleted, air, and, in many cases also with steam, at superatmospheric pressure to form a crude gas stream containing hydrogen, carbon oxides, small amounts of methane, and often steam and nitrogen and argon.

It is preferred that the turbine is employed to drive the compressor required to compress the oxygen-containing gas used in the reaction with the carbonaceous feedstock. Where, as is preferred, the combustion air is of the same chemical composition as this oxygen-containing gas, the same compressor may be used for both compressions. However often it is desirable to compress the oxygen-containing gas used for the reaction with the carbonaceous feedstock to a greater degree than the combustion air. This may be usefully achieved by the use of a two or more stage compressor and taking the combustion air from a point between stages.

Often the crude gas resulting from the above reaction of a carbonaceous feedstock with an oxygen-containing gas and, optionally, steam is subjected to the catalytic shift reaction with steam, to convert carbon monoxide to carbon dioxide with the concurrent production of more hydrogen, to produce the raw gas.

While the carbon dioxide is often removed from the raw gas prior to the separation of other impurities, for example by a "wet" process, for use in the present invention, the carbon dioxide, as well as other impurities, can be removed by PSA to give the fuel gas. Any excess of steam is often removed from the raw gas prior to removal of carbon dioxide.

For example, as described in EP—A—157480, ammonia synthesis gas may be made from a raw gas containing an excess of nitrogen over that required for reaction with hydrogen, as well as carbon dioxide, methane, argon, and carbon monoxide as impurities by PSA. In the PSA process a waste gas containing this excess of nitrogen, together with the bulk of the impurities, is separated from the raw gas to give the product ammonia synthesis gas (which may however require a subsequent methanation step). A similar process may be employed for the production of technical hydrogen as described in EP—A—204478. In those processes, the crude gas may be made by catalytic primary steam reforming a hyrocarbon feedstock in a heated furnace followed by reaction of the resulting primary reformed gas containing unreacted steam with air, oxygen-enriched air, or oxygen-depleted air, and passage of the reaction products over a secondary reforming catalyst in order to decrease the methane content of the reformed gas. In preferred forms of the processes described in those references, the primary reformer furnace is heated by the hot secondary reformed gas, and so no fired furnace is employed. A suitable primary reforming reactor configuration for such a process is described in EP—A—194067. It is fortunate that the heat balance of the two reforming stages is such that, when using air as the oxygen-containing gas in the secondary reforming stage, a suitable molar ratio of hydrogen plus carbon monoxide to nitrogen in the secondary reformer outlet gas can readily be attained to enable efficient impurity removal by the PSA process with a high hydrogen recovery. However the invention includes also the use of moderately enriched air containing up to 40% by volume of oxygen and also the use of oxygen depleted air containing down to 15% by volume of oxygen. Thermodynamic data permitting calculation of temperatures, pressures, and reactant proportions are readily available to chemical engineers.

The present invention is of particular utility in such processes where the heat required for the production of the crude gas is provided by the reaction of the feedstock with an oxygen-containing gas since, because there is no fired reformer furnace, the fuel value of the PSA waste gas cannot be recovered by using the PSA waste gas as part or all of the reformer furnace fuel. Instead, the PSA waste gas is used as the fuel gas to drive a turbine in accordance with the present invention. In particular, the power output of the turbine can be approximately equal to the power requirement of the compressor for the oxygen-containing gas employed in the reaction with the carbonaceous feedstock. The energy content of the PSA waste gas naturally will also depend on the extent to the shift reaction employed, since that will effect the carbon monoxide content of the PSA waste gas; on the purity of the unadsorbed PSA product stream, since that affects the flow rate of the waste gas relative to the PSA product; and on the waste gas pressure. If a greater power output is required from combustion of the waste gas, for example in order to compress the PSA product gas, the process conditions may be adjusted, for example to give a higher waste gas fuel value.

By the term "approximately equal" in relation to the power output and power requirement, we mean that the power output is within ± 10% of the power requirement. Thus we do not exclude the possibility of a small import of fuel gas, steam, or electricity to provide additional power for the compressor for the oxygen-containing gas employed in the reaction with the carbonaceous feedstock, or the export of electricity produced by a generator driven by the turbine. Indeed, it is often preferable to arrange the process conditions to provide such an export of electricity in order to provide the power for auxiliary equipment such as water pumps.

The PSA waste gas from such processes has a relatively low calorific value, typically below 300 BTU/scf, i.e. 11 $MJ.m^{-3}$, and, prior to carbon dioxide removal may be as low as 20 to 100 BTU/scf, i.e. 0.75 to 3.7 $MJ.m^{-3}$. Combustion of such low calorific value fuels is advantageously effected catalytically as described above.

As produced by the PSA stage, the waste gas is often at a relatively low pressure, e.g. 1.2 to 4 bar abs., and, for efficient wet carbon dioxide removal, a higher pressure, eg 5 to 10 bar abs., is desirable. Compression of the PSA waste gas, prior to "wet" carbon dioxide removal, may be effected by a compressor driven by the turbine.

The overall process conditions are preferably selected so that the combustion of the PSA waste gas provides that there is approximate equality, as aforesaid, between the power required for compression of the oxygen-containing gas used in the reaction with the carbonaceous feedstock and the net power obtained by the combustion of the PSA waste gas, ie after providing for such compression, if any, of the PSA waste gas and the combustion air.

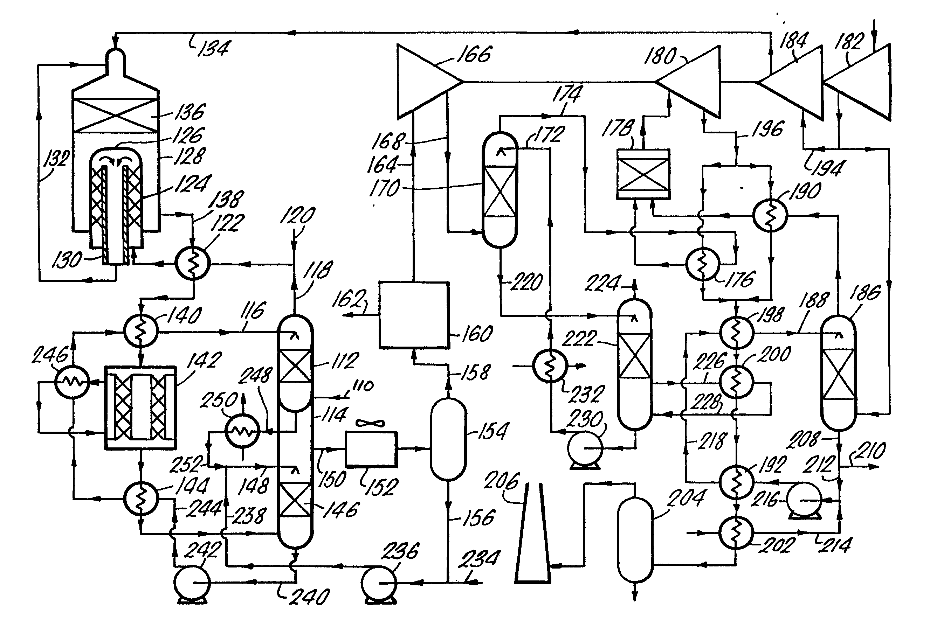

A preferred process is shown in flowsheet form in the accompanying drawing showing an integrated process for the production of a hydrogen-containing product gas using a PSA process for the removal of impurities from the product, removal of carbon dioxide from the PSA waste gas by a "wet" process with consequent saturation of the PSA waste gas, and the use of the turbine to power the air compressor employed in the production of the crude gas from which the product gas is made.

Calculated performance data for this process is included in the description.

In the drawing, desulphurised natural gas is fed, via line 110, to the upper (saturator) section 112 of a tower 114. Here the natural gas contacts a hot water stream, fed to the saturator via line 116, flowing down the packing in the upper section 112. The saturated gas leaves the saturator via line 118 and then, if steam is available for import, mixed with such imported steam supplied via line 120.

The resultant warm steam/gas mixture, which typically has a steam/gas volume ratio of 2 to 5, a temperature of 150 to 250°C, and a pressure of 25 to 50 bar abs., is then preheated in a heat exchanger 122, typically to 350 to 550°C, and fed into annular beds of primary reforming catalyst, typically supported nickel or cobalt, disposed in tubes 124 (only one of which is shown: in practice there will be a large number of such tubes), each having an upper closed end 126, heated in a furnace 128. The resulting hot gas, now typically at 600 to 800°C and containing carbon monoxide, carbon dioxide, hydrogen, unreacted steam, and several percent of methane, passes into the closed end 126 of the tube 124 and returns through an inner tube 130 which is insulated from the bed of reforming catalyst so that there is minimal heat exchange with the reacting gas in the annular catalyst bed.

The primary reformed gas is then fed via line 132 into the uppermost (combustion) section of the furnace 128 where it is mixed, at a burner, with air fed via line 134. A flame is formed and the combustion products are brought towards equilibrium at a lower methane content over a secondary reforming catalyst 136. The resulting secondary reformed gas, now typically at 900 to 1050°C, passes past the tubes 124 and so provides the heat required for the primary reforming occurring therein. In heat exchange with these tubes the secondary reformed gas is cooled, typically to 450 to 650°C.

The secondary reformed gas leaves furnace 128 via line 138 and is cooled in heat exchanger 122 and a water heater 140 to the shift inlet temperature. It then passes into a water-cooled shift reactor 142 in which the shift catalyst is disposed in tubes surrounded by water in a pressure shell. In shift reactor 142 the shift reaction is brought substantially to equilibrium at a temperature controlled at typically in the range 230 to 280°C giving an outlet carbon monoxide content in the range 0.1 to 1% by volume on a dry basis. The shift outlet temperature is preferably 10 to 30°C lower than the inlet temperature.

The shifted gas is then cooled in heat exchanger 144, passed into the lower packed de-saturation zone 146 of tower 114 where it contacts cool water fed in via line 148. The resulting water-depleted gas stream leaves desaturator 146 via line 150 and is cooled in cooler 152 to below the dew point of steam and passed into catchpot 154. Here liquid water is separated and removed via line 156 and dry gas is taken overhead via line 158 and passed to a PSA system 160.

PSA system 160 includes beds of absorbent material such as active carbon or a molecular sieve on which carbon dioxide is strongly adsorbed, hydrogen is very weakly, if at all, adsorbed, and nitrogen, carbon monoxide, methane, and argon, are at least partly adorbed. The PSA system incldues beds under regeneration, ie being purged and repressurised, and undergoing treatments such as pressure equalisation and depressurisation, and the necessary changeover valves. From the PSA system a technical hydrogen product stream is passed out via line 162 to a user. Also a PSA waste gas stream is passed out via line 164.

The PSA waste gas, which contains nitrogen, carbon dioxide, carbon monoxide, methane, argon, and some hydrogen, is fed via line 164 to a compressor 166 (unless its pressure is already high enough) and then, via line 168, to a carbon dioxide removal column 170 wherein it is contacted with a regenerated aqueous solution containing an absorbent for carbon dioxide and typically at a temperature of 60 to 80°C fed into column 170 via line 172. Carbon dioxide is absorbed from the PSA waste gas and the resulting carbon dioxide-depleted gas, which will now be saturated with water, is fed, via line 174, to a heat exchanger 176, and thence to a catalytic combustor 178 feeding hot gas to a turbine 180.

Combustor 178 can be of conventional design, for example, in the form of a metal tube having provision for feeding a shielding gas (which may be part of the saturated air stream produced as described below) along its walls, possibly with the aid of a perforated metal liner to set up a double layer of such gas; however, as a result of the low calorific value of the waste gas, and the content of steam, the flame temperature can be lower than in conventional combustion zones and hence the wall shielding provision can be less elaborate or indeed unnecessary. Combustor 178 as shown includes a catalyst, suitably in honeycomb form, to promote the combustion of the reaction mixture.

The turbine 180 provides shaft power for a two-stage air compressor 182, 184 and PSA waste gas compressor 166. The low pressure stage 182 of the air compressor supplies air, via a saturator 186 where it is saturated with hot water supplied via line 188 and heat exchangers 190 and 192, to the combustor 178 inlet. The low pressure stage 182 of the air compressor also provides a feed, via line 194, to the high pressure stage 184 of the air compressor where it is compressed to the process air pressure and fed to the secondary reformer via line 134.

Exhaust gas from the turbine 180 is fed, via line 196, to heat exchangers 176 and 190 where it acts as the source of heat for superheating the saturated air and carbon dioxide-depleted waste gas. The partly cooled exhaust gas is cooled further in heat exchangers 198, 200, 192, and 202, and then is discharged to a catchpot 204 in which liquid water is separated before the exhaust gas is discharged to the atmosphere via stack 206.

Cooled water is taken as bottoms from saturator 186 via line 208 and is fed to a blow-down point at which a purge stream 210 is taken. The main stream of water is fed, via line 212, to a make-up point at which fresh water, heated in heat exchanger 202, is added via line 214. The resultant water stream is then fed, via pump 216, to preliminary heat exchanger 192 and then, via line 218, to main heat exchanger 198 where it is heated by the turbine exhaust to the satuator inlet temperature. The resulting stream of hot water, which is at a pressure too high to permit boiling, is then fed to saturator 186 via line 188.

The carbon dioxide-loaded absorbent solution, taken from column 170 via line 220, is fed to a column 222 where its pressure is reduced so that carbon dioxide is desorbed therefrom. The desorbed carbon dioxide is taken as overheads from column 222 via line 224. A part stream of the thus partly regnerated absorbent solution is taken from column 222 via line 226 and passed through heat exchanger 200 where it is heated by the turbine exhaust gas and returned to column 222 via line 228. This serves to heat the absorbent solution in column 222 to aid more complete desorption of carbon dioxide therefrom. Carbon dioxide-lean absorbent is then taken from column 222 and compressed back to the waste gas inlet pressure by pump 230 and returned to column 170 via cooler 232 and line 172. Hot water produced in cooler 232 may be used to fed a saturator (not shown) interposed in line 174.

Cold condensate at the bottom of catchpot 154 is fed, via line 156, together with make up water fed via line 234, to pump 236 and then, via line 238, into a cool water stream which is then fed via line 148 into the lower (desaturator) packed section 146 of tower 114. Here the unreacted steam in the shifted gas from shift reactor 142 condenses into the water, giving a warm water stream which is taken as bottoms, via line 240, and fed, via pump 242 and line 244, to three heating stages, viz. indirect heat exchanger with shifted gas in heat exchanger 144, then, in a heat exchanger 246, with condensing steam raised in shift reactor 142, and then with partly cooled secondary reformed gas in heat exchanger 140. The water stream may then still be entirely liquid or may be partly boiling and is fed, via line 116, to the saturation zone 112 in the upper section of the tower 114. The cooled water remaining after contacting the natural gas in the upper section of tower 114 is fed, via line 248 to a heat exchanger 250 where it is cooled by heat exchange with boiler feed water to be fed to a de-aerator (not shown); the cooled water is then fed, via line 252, to be mixed with cold condensate fed via line 238, and fed to line 148.

In a specific calculated example of the process, 1400 kmol.h$^{-1}$ of natural gas (calculated as carbon atoms in a mixture of 92.7% by volume methane and 7.3% by volume ethane) are reacted with 3500 kmol.h$^{-1}$ of steam over the catalyst in tubes 124 and the product of that reaction is reacted with air providing 620 kmol.h$^{-1}$ of oxygen, brought to reforming equilibrium over catalyst 136, cooled and brought to shift equilibrium at an outlet temperature of 230°C in reactor 142. Finally the gas is cooled, largely freed of water vapour in catchpot 154, and subjected to PSA separation in the PSA system 160. Table 3 below shows the flow rates, temperatures, and pressures, of the inlet, i.e. raw, gas, product gas, and waste gas of the PSA stage.

Table

| Stream | Temp. (°C) | Press. (bar abs) | Flow rates (kmol.h$^{-1}$) | | | | | |
|---|---|---|---|---|---|---|---|---|
| | | | CO | CO$_2$ | H$_2$ | CH$_4$ | N$_2$ | Ar |
| inlet | 35 | 35 | 25 | 1285 | 4246 | 38 | 2354 | 49 |
| product | 40 | 34 | - | - | 3736 | - | 116 | 34 |
| waste | 30 | 1.5 | 25 | 1285 | 510 | 38 | 2238 | 15 |

The carbon monoxide content of the product is 100 ppm by volume. The hydrogen recovery is 88%. The waste gas has a calorific value of 49.3 BTU/scf (1.84 MJ.m$^{-3}$).

The waste gas is compressed to 3.0 bar abs. by compressor 166 and carbon dioxide is then removed from the waste gas using methyl diethanolamine as the absorbent with an absorbent temperature of 60°C in column 170. The carbon dioxide-depleted fuel gas has a water vapour content of 5.5% by volume and contains 19.9% by volume of carbon dioxide. The amount of combustion air fed to saturator 186 is 1800 kmol.h$^{-1}$ and, after saturation, has a water vapour content of 45% by volume and a temperature of 108°C. The saturated fuel gas and air are heated to 400°C in heat exchangers 176 and 190. Enough heat is recovered in heat exchanger 198 to maintain the temperature of the absorbent solution in column 222 at 80°C.

The net power output from the turbine is in substantial balance with the power requirement of the two stage air compressor.

**Claims**

1. A process for the recovery of energy from a low calorific value fuel gas containing carbon dioxide by the production of shaft power comprising contacting said fuel gas with an aqueous medium so as to introduce steam by saturation, thereafter combusting said fuel gas, having a calorific value of 15 to 1100 BTU/scf (0.6 to 41 MJ.m$^{-3}$), with air and expanding the resultant combustion products in a turbine producing the shaft power, and wherein the air at the combustion zone inlet pressure is provided by a compressor driven by said shaft power, and steam is added to the combustion air, prior to combustion, by direct heat exchange with a stream of hot water obtained by indirect heat exchange of the turbine exhaust gas under sufficient pressure to prevent boiling, characterised in that the saturation of said fuel gas includes, in an adsorption zone, contacting the fuel gas with a carbon dioxide-lean solution of an absorbent for carbon dioxide giving a carbon dioxide-depleted fuel gas which is fed to the combustion zone and a carbon dioxide-loaded absorbent solution which is fed to a regeneration zone, and the regeneration of the absorbent solution to give the carbon dioxide-lean absorbent solution, which is recycled to the absorption zone, includes heating the absorbent solution by indirect heat exchange with the turbine exhaust gas under sufficient pressure to prevent boiling.

2. A process according to claim 1 wherein the combustion is effected catalytically.

3. A process according to claim 1 or claim 2 wherein the fuel gas is compressed prior to combustion by a compressor driven by said turbine.

4. A process according to any one of claims 1 to 3 wherein the fuel gas is waste gas from a pressure swing adsorption process producing a hydrogen-containing product.

5. A process according to claim 4 wherein the raw gas fed to the pressure swing adsorption process is made by reacting, at superatmospheric pressure, a carbonaceous feedstock with an oxygen-containing gas, and, optionally, also with steam.

6. A process according to claim 5 wherein the carbonaceous feedstock is a hydrocarbon feedstock and is catalytically primary steam reformed, the resultant primary reformed gas, containing an excess of steam, is mixed with an oxygen-containing gas and subjected to catalytic secondary steam reforming, and the heat required for the primary steam reforming is supplied by the secondary reformer outlet gas.

7. A process according to claim 5 or claim 6 wherein the turbine provides the power required to compress the oxygen-containing gas used in the reaction with the carbonaceous feedstock.

8. A process according to claim 7 wherein the process conditions are selected such that there is approximate equality between the power required to compress the oxygen-containing gas and the net power output of the turbine.

9. A process according to any one of the preceding claims wherein the compressed air and/or the fuel gas is heated, prior to entering the combustion zone, by heat exchange with the turbine effluent.

## EP 0 207 620 B1

10. A process according to any one of claims 1 to 9 wherein, after introduction of the steam by contact with said absorbent solution, the fuel gas is subjected to an additional saturation step wherein the carbon dioxide-depleted fuel gas is contacted with water that is hotter than said absorbent solution contacted with said fuel gas.

**Patentansprüche**

1. Verfahren zur Rückgewinnung von Energie aus einem kohlendioxidhaltigen Brenngas mit niedrigem Brennwert durch Erzeugung von Wellenleistung, bei dem das Brenngas mit einem wäßrigen Medium in Berührung gebracht wird, um durch Sättigung Wasserdampf einzuführen, wobei danach das Brenngas, das einen Brennwert von 0,6 bis 41 MJ.m$^{-3}$ (15 bis 110 BTU/scf) hat, mit Luft verbrannt wird und die erhaltenen Verbrennungsprodukte in einer Turbine, die die Wellenleistung erzeugt, expandiert werden und wobei die Luft mit dem Verbrennungszoneneinlaßdruck durch einen Verdichter, der durch die Wellenleistung angetrieben wird, bereitgestellt wird und der Verbrennungsluft durch direkten Wärmeaustausch mit einem Strom von heißem Wasser, der durch indirekten Wärmeaustausch mit dem Turbinenabgas unter einem Druck, der ausreicht, um ein Sieden zu verhindern, erhalten wird, vor der Verbrennung Wasserdampf zugesetzt wird, dadurch gekennzeichnet, daß die Sättigung des Brenngases ein In-Berührung-Bringen des Brenngases mit einer kohlendioxidarmen Lösung eines Adsorptionsmittels für Kohlendioxid in einer Absorptionszone umfaßt, wobei ein an Kohlendioxid verarmtes Brenngas, das der Verbrennungszone zugeführt wird, und eine mit Kohlendioxid beladene Absorptionsmittellösung, die einer Regenerierungszone zugeführt wird, erhalten werden, und daß die Regenerierung der Absorptionsmittellösung, die durchgeführt wird, um die kohlendioxidarme Absorptionsmittellösung zu erhalten, die zur Absorptionszone zurückführt wird, ein Erhitzen der Absorptionsmittellösung durch indirekten Wärmeaustausch mit dem Turbinenabgas unter einem Druck, der ausreicht, um ein Sieden zu verhindern, umfaßt.

2. Verfahren nach Anspruch 1, bei dem die Verbrennung auf katalytischem Wege durchgeführt wird.

3. Verfahren nach Anspruch 1 oder Anspruch 2, bei dem das Brenngas vor der Verbrennung durch einen Verdichter, der durch die Turbine angetrieben wird, verdichtet wird.

4. Verfahren nach einen der Ansprüche 1 bis 3, bei dem das Brenngas Abgas aus einem Druckschwankungs-Adsorptionsverfahren, bei dem ein wasserstoffhaltiges Produkt erzeugt wird, ist.

5. Verfahren nach Anspruch 4, bei dem das Rohgas, das dem Druckschwankungs-Adsorptionsverfahren zugeführt wird, dadurch hergestellt wird, daß ein kohlenstoffhaltiges Einsatzmaterial bei einem Druck, der über dem Atmosphärendruck liegt, mit einem sauerstoffhaltigen Gas und wahlweise auch mit Wasserdampf umgesetzt wird.

6. Verfahren nach Anspruch 5, bei dem das kohlenstoffhaltige Einsatzmaterial ein Kohlenwasserstoff-Einsatzmaterial ist und einer katalytischen Wasserdampf-Primärreformierung unterzogen wird, wobei das erhaltene primärreformierte Gas, das überschüssigen Wasserdampf enthält, mit einem sauerstoffhaltigen Gas vermischt und einer katalytischen Wasserdampf-Sekundärreformierung unterzogen wird und die Wärme, die für die Wasserdampf-Primärreformierung benötigt wird, durch das Auslaßgas der Sekundärreformieranlage geliefert wird.

7. Verfahren nach Anspruch 5 oder Anspruch 6, bei dem die Turbine die Leistung liefert, die zum Verdichten des bei der Umsetzung mit dem kohlenstoffhaltigen Einsatzmaterial verwendeten sauerstoffhaltigen Gases benötigt wird.

8. Verfahren nach Anspruch 7, bei dem die Verfahrensbedingungen derart gewählt sind, daß die Leistung, die zum Verdichten des sauerstoffhaltigen Gases benötigt wird, und die Gesamtausgangsleistung der Turbine annnähernd gleich sind.

9. Verfahren nach einem der vorhergehenden Ansprüche, bei dem die verdichtete Luft und/oder das Brenngas vor dem Eintritt in die Verbrennungszone durch Wärmeaustausch mit dem Turbinenabgas erhitzt wird.

10. Verfahren nach einem der Ansprüche 1 bis 9, bei dem das Brenngas nach Einführung des Wasserdampfes durch Berührung mit der Absorptionsmittellösung einem weiteren Sättigungsschritt unterzogen wird, bei dem das an Kohlendioxid verarmte Brenngas mit Wasser in Berührung gebracht wird, das heißer ist als die Absorptionsmittellösung, die mit dem Brenngas in Berührung gebracht wird.

**Revendications**

1. Procédé pour la récupération d'énergie à partir d'un gaz combustible à faible valeur calorifique contenant du dioxyde de carbone par la production d'énergie mécanique, comprenant le contact de ce gaz combustible avec un milieu aqueux pour introduire de la vapeur par saturation, puis la combustion de ce gaz combustible ayant une valeur calorifique de 0,6 à 41 MJ.m$^{-3}$ (15 à 1110 BTU/scf) avec de l'air et la détente des produits de combustion résultants dans une turbine produisant l'énergie mécanique et dans lequel l'air à la pression d'entrée de la zone de combustion est fourni par un compresseur entraîné par cette énergie mécanique et la vapeur est ajoutée à l'air de combustion, avant la combustion, par échange de chaleur direct avec un courant d'eau chaude obtenu par échange de chaleur indirect du gaz d'échappement de la turbine sous une pression suffisante pour empêcher l'ébullition, caractérisé en ce que la saturation de

8

ce gaz combustible comprend, dans une zone d'absorption, le contact du gaz combustible avec une solution pauvre en dioxyde de carbone d'un absorbant pour le dioxyde de carbone donnant un gaz combustible appauvri en dioxyde de carbone qui est introduit dans la zone de combustion et une solution d'absorbant chargée en dioxyde de carbone qui est envoyée dans une zone de régénération, et la régénération de la solution d'absorbant pour donner la solution d'absorbant pauvre en dioxyde de carbone qui est recyclée vers la zone d'absorption, comprend le chauffage de la solution d'absorbant par échange de chaleur indirect avec le gaz d'échappement de la turbine sous une pression suffisante pour empêcher l'ébullition.

2. Procédé suivant la revendication 1, caractérisé en ce que la combustion est effectuée catalytiquement.

3. Procédé suivant la revendication 1 ou la revendication 2, caractérisé en ce que le gaz combustible est comprimé avant combustion par un compresseur entraîné par cette turbine.

4. Procédé suivant l'une quelconque des revendications 1 à 3, caractérisé en ce que le gaz combustible est un gaz d'échappement issu d'un procédé d'adsorption à alternance de pressioons produisant un produit contenant de l'hydrogène.

5. Procédé suivant la revendication 4, caractérisé en ce que le gaz de départ introduit dans le procédé d'adsorption à alternance de pressions, est obtenu par réaction, à une pression superatmosphérique, d'une charge d'alimentation carbonée avec un gaz contenant de l'oxygène, et éventuellement aussi avec de la vapeur.

6. Procédé suivant la revendication 5, caractérisé en ce que la charge d'alimentation carbonée est une charge d'alimentation hydrocarbonée et est soumise à un reformage à la vapeur catalytique primaire, le gaz issu du reformage primaire contenant un excès de vapeur, est mélangé avec un gaz contenant de l'oxygène et soumis à un reformage à la vapeur catalytique secondaire, et la chaleur requise pour le reformage à la vapeur primaire est fournie par le gaz de sortie du reformeur secondaire.

7. Procédé suivant la revendication 5 ou la revendication 6, caractérisé en ce que la turbine fournit l'énergie requise pour comprimer le gaz contenant de l'oxygène utilisé dans la réaction avec la charge d'alimentation carbonée.

8. Procédé suivant la revendication 7, caractérisé en ce que les conditions du procédé sont choisies de telle façon qu'il y ait à peu près égalité entre l'énergie requise pour comprimer le gaz contenant l'oxygène et le rendement énergétique net de la turbine.

9. Procédé suivant l'une quelconque des revendications précédentes, caractérisé en ce que l'air comprimé et/ou le gaz combustible ont chauffés, avant entrée dans la zone de combustion, par échange de chaleur avec l'effluent de la turbine.

10. Procédé suivant l'une quelconque des revendications 1 à 9, caractérisé en ce qu'après introduction de la vapeur par contact avec cette solution d'absorbant, le gaz combustible est sousmis à une étape de saturation supplémentaire dans laquelle le gaz combustible appauvri en dioxyde de carbone est mis en contact avec de l'eau qui est plus chaude que cette solution d'absorbant mise en contact avec ce gaz combustible.

EP 0 207 620 B1

1